(19) Europäisches Patentamt / European Patent Office / Office européen des brevets

(11) **EP 2 506 029 A1**

(12) **DEMANDE DE BREVET EUROPEEN**

(43) Date de publication:
**03.10.2012 Bulletin 2012/40**

(51) Int Cl.:
***G01S 5/02*** *(2010.01)*

(21) Numéro de dépôt: **12161610.6**

(22) Date de dépôt: **27.03.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **30.03.2011 FR 1152655**

(71) Demandeur: **France Telecom**
**75015 Paris (FR)**

(72) Inventeurs:
• **Girard, Bruno**
  **38130 ECHIROLLES (FR)**
• **Berenguer, Marc**
  **38420 REVEL (FR)**

(74) Mandataire: **Cabinet Plasseraud**
**52, rue de la Victoire**
**75440 Paris Cedex 09 (FR)**

(54) **Traitement de données pour la localisation d'un équipement**

(57) L'invention se rapporte à un traitement de données pour localiser un équipement (1) comprenant un capteur de déplacement (2) dans un espace de géolocalisation, le traitement comprenant :
- l'obtention d'au moins une mesure de déplacement de l'équipement réalisée par le capteur de déplacement,,
- l'obtention d'un ensemble d'éléments formant une partition de l'espace de géolocalisation,
- la génération d'une pluie aléatoire de points sur l'espace de géolocalisation, et
- la redistribution des points sur les éléments de l'espace de géolocalisation en fonction de coefficients de pondération respectivement associés aux éléments et de la mesure de déplacement de l'équipement réalisée par le capteur de déplacement, un coefficient de pondération correspondant à une probabilité de présence de l'équipement dans l'élément associé, le nombre de points redistribués sur cet élément étant d'autant plus grand que la probabilité de présence dans cet élément est grande, puis
- la détermination d'une localisation de l'équipement (1) dans l'espace de géolocalisation à partir des points redistribués.

FIG.1.

EP 2 506 029 A1

**Description**

La présente invention vise un traitement de données pour la localisation d'un équipement, et en particulier pour la localisation d'un équipement dans un espace de géolocalisation.

On appelle espace de géolocalisation un espace de surface déterminée dans lequel une géolocalisation doit être réalisée. L'espace de géolocalisation peut être un espace fermé, par exemple un centre commercial, un musée, un aéroport, un appartement, un local professionnel, etc. L'espace de géolocalisation peut également être un espace ouvert, par exemple un carrefour routier, un échangeur autoroutier, etc.

Les systèmes de géolocalisation connus ne permettent généralement pas d'obtenir des résultats précis et fiables dans de tels espaces. En effet, ces systèmes dérivent très rapidement et l'erreur observée correspond souvent à la somme des erreurs élémentaires d'intégration.

Pour améliorer la précision et la fiabilité des résultats, un procédé de filtrage particulaire peut être utilisé. Un procédé de filtrage particulaire comporte en général une étape de génération d'une pluie aléatoire de points distribués de manière aléatoire sur l'espace de géolocalisation, une étape de translation de chaque point d'un vecteur de déplacement calculé par un capteur inertiel, une étape de détermination d'un ensemble de points ayant heurtés un mur de l'espace de géolocalisation lors de la translation, et une étape de déplacement des points ayant heurtés un mur à une position correspondant à un barycentre des points n'ayant pas heurtés un mur. Les étapes de translation, de détermination et de déplacement sont répétées jusqu'à ce que les points convergent vers une même position, qui est alors considérée comme la position du système.

Un inconvénient d'un tel procédé de filtrage particulaire est qu'il nécessite une grande puissance de calcul, qui n'est pas toujours disponible dans les équipements intégrant des systèmes de géolocalisation, notamment dans les téléphones mobiles ou dans les assistants numériques personnels (PDA - Personal Digital Assistant).

La présente invention vient améliorer la situation.

A cet effet, l'invention propose un procédé de traitement de données pour localiser un équipement comprenant un capteur de déplacement dans un espace de géolocalisation. Le procédé comprend des étapes :

a) obtenir au moins une mesure de déplacement de l'équipement réalisée par le capteur de déplacement,

b) obtenir un ensemble d'éléments formant une partition de l'espace de géolocalisation,

c) générer une pluie aléatoire de points sur l'espace de géolocalisation, et

d) redistribuer lesdits points sur les éléments de l'espace de géolocalisation en fonction de coefficients de pondération respectivement associés aux éléments et de ladite au moins une mesure de déplacement de l'équipement réalisée par le capteur de déplacement, un coefficient de pondération correspondant à une probabilité de présence de l'équipement dans l'élément associé, le nombre de points redistribués sur cet élément étant d'autant plus grand que la probabilité de présence dans cet élément est grande, puis

e) déterminer une localisation de l'équipement dans l'espace de géolocalisation à partir des points redistribués.

Le capteur de déplacement peut être, par exemple, un capteur inertiel, un accéléromètre ou un compas magnétique.

La solution proposée dans cette invention permet ainsi d'améliorer la précision et la fiabilité d'une géolocalisation dans un espace de géolocalisation, tout en réduisant la puissance de calcul nécessaire.

Le fait que le nombre de points redistribués sur un élément de la partition soit d'autant plus grand que la probabilité de présence dans cet élément est grande, permet de renforcer encore la fiabilité de la méthode de géolocalisation.

Le procédé peut comprendre une étape f) consistant à, pour chaque point généré, calculer une translation du point en fonction d'une mesure de déplacement de l'équipement réalisée par le capteur de déplacement.

Le procédé peut en outre comprendre des étapes :

g) pour chaque point translaté, tester si le point translaté heurte un mur de l'espace de géolocalisation, et

h) redistribuer les points ayant été déterminés comme heurtant un mur de l'espace de géolocalisation sur les éléments en fonction des coefficients de pondération, un point redistribué sur un élément étant positionné à une position correspondant au barycentre des points dudit élément n'ayant pas été déterminés comme heurtant un mur de l'espace de géolocalisation.

On appelle 'mur' tout obstacle à la circulation dans l'espace de géolocalisation considéré, par exemple une cloison, une vitre, etc.

Les étapes f), g) et h) peuvent être répétées pour déterminer une position de convergence vers laquelle les points de la pluie aléatoire convergent.

Les étapes f), g) et h) sont par exemple répétées à chaque réalisation d'une mesure de déplacement par le capteur de déplacement.

Les coefficients de pondération peuvent être fonction d'un temps de mise en oeuvre du procédé. En variante, les coefficients de pondération peuvent être fonction d'une durée de mise en oeuvre du procédé.

Avantageusement, le procédé comporte une étape de réception de données de localisation provenant d'un module de géolocalisation par satellite, par GSM, ou par WiFi, l'étape a) de détermination d'une entrée de l'équipement dans un espace de géolocalisation étant réalisée en utilisant lesdites données de localisation.

L'invention propose également un programme informatique comportant des instructions pour la mise en oeuvre du procédé décrit ci-dessus lorsque ce programme est exécuté par un processeur.

L'invention propose également un équipement comprenant un capteur de déplacement, configuré pour réaliser une mesure de déplacement de l'équipement, et un module de traitement, configuré pour :

- obtenir au moins une mesure de déplacement de l'équipement réalisée par le capteur de déplacement"

- obtenir un ensemble d'éléments formant une partition de l'espace de géolocalisation,

- générer une pluie aléatoire de points sur l'espace de géolocalisation, et

- redistribuer lesdits points sur les éléments de l'espace de géolocalisation en fonction de coefficients de pondération respectivement associés aux éléments et de ladite au moins une mesure de déplacement de l'équipement réalisée par le capteur de déplacement, un coefficient de pondération correspondant à une probabilité de présence de l'équipement dans l'élément associé, le nombre de points redistribués sur cet élément étant d'autant plus grand que la probabilité de présence dans cet élément est grande, puis

- déterminer une localisation de l'équipement dans l'espace de géolocalisation à partir des points redistribués.

Le module de traitement peut être configuré pour calculer, pour chaque point généré, une translation du point en fonction d'une mesure de déplacement de l'équipement réalisée par le capteur de déplacement.

Le module de traitement peut être configuré pour tester, pour chaque point translaté, si le point translaté heurte un mur de l'espace de géolocalisation, et pour redistribuer les points ayant été déterminés comme heurtant un mur de l'espace de géolocalisation sur les éléments en fonction des coefficients de pondération, un point redistribué sur un élément étant positionné à une position correspondant au barycentre des points dudit élément n'ayant pas été déterminés comme heurtant un mur de l'espace de géolocalisation.

L'équipement peut en outre comporter un module de géolocalisation par satellite, par GSM, ou par WiFi. Le module de traitement peut alors être configuré pour recevoir des données de localisation provenant du module de géolocalisation, et pour déterminer que l'équipement entre dans un espace de géolocalisation en utilisant lesdites données de localisation.

Le capteur de déplacement est par exemple un capteur inertiel, un accéléromètre, ou un compas magnétique.

D'autres caractéristiques et avantages de l'invention apparaîtront encore à la lecture de la description qui va suivre. Celle-ci est purement illustrative et doit être lue en regard des dessins annexés sur lesquels :

- la Figure 1 est un schéma fonctionnel montrant un équipement comportant des moyens de géolocalisation selon un mode de réalisation de l'invention ;

- la Figure 2 est un organigramme illustrant les étapes d'un procédé de géolocalisation selon un mode de réalisation de l'invention, cet organigramme pouvant représenter l'algorithme général du programme informatique au sens de l'invention ; et

- la Figure 3 est une vue schématique d'un espace de géolocalisation dans lequel le procédé de la figure 2 peut être mis en oeuvre.

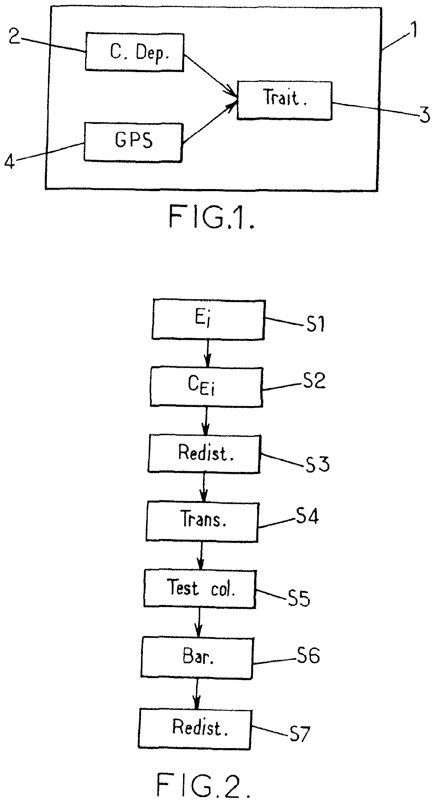

La figure 1 représente un équipement 1 , par exemple un téléphone mobile ou un assistant numérique personnel.

L'équipement 1 comporte des moyens de géolocalisation configurés pour déterminer une localisation de l'équipement 1 dans un espace de géolocalisation. L'espace de géolocalisation peut être un espace de géolocalisation fermé, par exemple un centre commercial, un musée, un aéroport, un appartement, ou un local professionnel. L'espace de géolocalisation peut également être un espace de géolocalisation ouvert, par exemple un carrefour routier, ou un échangeur autoroutier.

Les moyens de géolocalisation comprennent un capteur de déplacement 2, configuré pour réaliser une mesure de déplacement de l'équipement 1, et un module de traitement 3, configuré pour déterminer une localisation de l'équipement 1 à partir de mesures de déplacement réalisées par le capteur de déplacement 2. Le capteur de déplacement 2 est par exemple un capteur inertiel, un accéléromètre ou un compas magnétique.

L'équipement 1 peut en outre comporter un module de géolocalisation 4 par satellite (GPS), par GSM, par WiFi, ou autre.

En se référant à la figure 2, on décrit ci-dessous un mode de réalisation d'un procédé de traitement de données pour localiser l'équipement 1 dans un espace de géolocalisation. Le procédé est par exemple initialisé lorsque l'utilisateur de l'équipement 1 entre dans un espace de géolocalisation prédéterminé.

L'entrée de l'utilisateur dans l'espace de géolocalisation peut être déterminée en utilisant des données de localisation provenant du module de géolocalisation 4. En variante, l'entrée de l'utilisateur dans l'espace de géolocalisation peut être spécifiée par l'utilisateur, par exemple à l'aide d'un bouton prévu sur l'équipement 1.

A l'étape S1, le module de traitement 3 détermine un ensemble d'éléments $E_i$ formant une partition de l'espace de géolocalisation. Les éléments $E_i$ sont disjoints deux à deux, et leur union couvre l'ensemble de l'espace de géolocalisation.

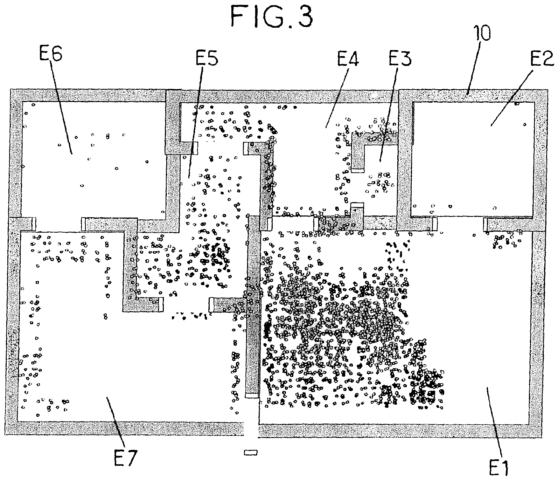

La figure 3 représente à titre d'exemple un espace de géolocalisation 10 comprenant sept pièces. Une partition de l'espace de géolocalisation 10 est par exemple déterminée de manière que chaque élément $E_i$ corresponde à une pièce. L'ensemble d'éléments comprend alors des éléments $E_1$ à $E_7$.

En variante, une partition d'un espace de géolocalisation peut être déterminée de manière que chaque élément $E_i$ corresponde à une salle (par exemple une salle d'un musée), à un commerce (par exemple un commerce d'un centre commercial), etc.

A l'étape S2, le module de traitement 3 détermine un coefficient de pondération $C_{Ei}$ pour chaque élément $E_i$ de la partition. Un coefficient de pondération $C_{Ei}$ correspond à une probabilité de présence de l'utilisateur de l'équipement 1, donc de l'équipement 1, dans l'élément $E_i$ associé.

Par exemple, la probabilité de trouver une personne dans la zone des portes d'embarquement d'un aéroport au voisinage de l'heure du décollage n'est pas la même que celle de trouver la personne dans une autre zone de l'aéroport.

Une phase d'apprentissage peut être utilisée pour récolter des informations permettant de déterminer les coefficients de pondération $C_{Ei}$, par exemple un taux de visite de différentes salles d'un musée, un taux de fréquentation d'un commerce d'un centre commercial, une proportion de temps passé dans une pièce d'un appartement, etc.

Les coefficients de pondération $C_{Ei}$ peuvent dépendre d'un temps T de mise en oeuvre du procédé. Par exemple, dans le cas d'un espace de géolocalisation de type appartement, une probabilité de présence dans une pièce donnée dépend de l'heure.

Le tableau ci-dessous illustre un cas particulier de détermination de coefficients de pondération $C_{Ei}$ pour un appartement comprenant quatre pièces $P_1$ à $P_4$, respectivement associées à quatre éléments $E_1$ à $E_4$ formant une partition de l'appartement. Pour chaque pièce $P_i$, un coefficient de pondération $C_{Ei}$ est déterminé comme égal à une probabilité de présence $X_{Ti-Pj}\%$ dans la pièce $P_i$ à un temps $T_i$.

| Pièce temps | $P_1$ | $P_2$ | $P_3$ | $P_4$ |
|---|---|---|---|---|
| $T_0$ | $X_{T0-P1}\%$ | $X_{T0-P2}\%$ | $X_{T0-P3}\%$ | $X_{T0-P4}\%$ |
| $T_1$ | $X_{T1-P1}\%$ | $X_{T1-P2}\%$ | $X_{T1-P3}\%$ | $X_{T1-P4}\%$ |
| $T_2$ | $X_{T2-P1}\%$ | $X_{T2-P2}\%$ | $X_{T2-P3}\%$ | $X_{T2-P4}\%$ |
| $T_x$ | $X_{Tx-P1}\%$ | $X_{Tx-P2}\%$ | $X_{Tx-P3}\%$ | $X_{Tx-P4}\%$ |

Le coefficient de pondération $C_{Ei}$ est alors fonction de l'heure à laquelle le procédé est mis en oeuvre. Par exemple, pour la pièce $P_1$, le coefficient $C_{Ei}$ sera déterminé comme étant égal à $X_{T0-P1}\%$ si le procédé est mis en oeuvre dans une plage horaire allant du temps $T_0$ au temps $T_1$, comme étant égal à $X_{T1-P1}\%$ si le procédé est mis en oeuvre dans une plage horaire allant du temps $T_1$ au temps $T_2$, etc.

En variante, les coefficients de pondération $C_{Ei}$ peuvent dépendre d'une durée $\Delta T$ de mise en oeuvre du procédé. Par exemple, dans le cas d'un musée, une probabilité de présence dans une salle du musée dépend du temps déjà passé dans le musée par l'utilisateur, c'est-à-dire de la durée entre le temps de mise en oeuvre du procédé et le temps d'entrée de l'utilisateur dans l'espace de géolocalisation ($\Delta T = T - T_{entrée}$).

Le tableau ci-dessous illustre un cas particulier de détermination de coefficients de pondération $C_{Ei}$ pour un musée comportant quatre salles $S_1$ à $S_4$, respectivement associées à quatre éléments $E_1$ à $E_4$ formant une partition du musée. Pour chaque salle $S_i$, un coefficient de pondération $C_{Ei}$ est déterminé comme égal à une probabilité de présence $X_{\Delta Ti-Sj}\%$ dans la salle $S_i$ en fonction d'une durée $\Delta T_i$.

| Pièce $\Delta$temps | $S_1$ | $S_2$ | $S_3$ | $S_4$ |
|---|---|---|---|---|
| $\Delta T_0$ | $X_{\Delta T0-S1}\%$ | $X_{\Delta T0-S2}\%$ | $X_{\Delta T0-S3}\%$ | $X_{\Delta T0-S4}\%$ |
| $\Delta T_1$ | $X_{\Delta T1-S1}\%$ | $X_{\Delta T1-S2}\%$ | $X_{\Delta T1-S3}\%$ | $X_{\Delta T1-S4}\%$ |
| $\Delta T_2$ | $X_{\Delta T2-S1}\%$ | $X_{\Delta T2-S2}\%$ | $X_{\Delta T2-S3}\%$ | $X_{\Delta T2-S4}\%$ |
| $\Delta T_x$ | $X_{\Delta Tx-S1}\%$ | $X_{\Delta Tx-S2}\%$ | $X_{\Delta Tx-S3}\%$ | $X_{\Delta Tx-S4}\%$ |

Le coefficient de pondération $C_{Ei}$ est alors fonction du temps déjà passé dans l'espace de géolocalisation au moment où le procédé est mis en oeuvre. Par exemple, pour la salle $S_1$, le coefficient $C_{Ei}$ sera déterminé comme étant égal à $X_{\Delta T0-S1}\%$ si le procédé est mis en oeuvre lorsque l'utilisateur est dans l'espace de géolocalisation depuis un temps inférieur à la durée $\Delta T_0$, comme étant égal à $X_{\Delta T1-S1}\%$ si le procédé est mis en oeuvre lorsque l'utilisateur est dans l'espace de géolocalisation depuis une durée comprise entre $\Delta T_0$ et $\Delta T_1$, etc.

Les coefficients de pondération $C_{Ei}$ peuvent être réajustés en temps réel, pour définir une pondération dynamique de l'occupation de l'espace de géolocalisation.

A l'étape S3, le module de traitement 3 génère une pluie aléatoire de points, c'est-à-dire un ensemble de points à distribuer de manière aléatoire sur l'espace de géolocalisation. Le nombre de points est par exemple d'environ 10000.

Puis, le module de traitement 3 redistribue les points sur les éléments $E_i$ de l'espace de géolocalisation en fonction des coefficients de pondération $C_{Ei}$. Ainsi, plus la probabilité de présence dans un élément $E_i$ est grande et plus le nombre de points distribués sur cet élément $E_i$ sera grand. Par exemple, sur la figure 3, beaucoup de points ont été redistribués sur l'élément $E_1$, et très peu de points ont été redistribués sur les éléments $E_2$ et $E_6$.

A l'étape S4, le module de traitement 3 applique à chaque point une translation dont la valeur est fonction d'une mesure de déplacement réalisé par le capteur de déplacement 2. Par exemple, chaque point est translaté d'un vecteur correspondant à un vecteur de déplacement de l'équipement 1 calculé à partir de la mesure de déplacement fournie par le capteur de déplacement 2 à l'itération courante.

A l'étape S5, le module de traitement 3 teste pour chaque point translaté s'il heurte un mur de l'espace de géolocalisation.

A l'étape S6, le module de traitement 3 calcule, pour chaque élément $E_i$, un barycentre des points de l'élément $E_i$ n'ayant pas été déterminé comme heurtant un mur lors de la translation.

A l'étape S7, le module de traitement 3 redistribue les points ayant été déterminés comme heurtant un mur sur les éléments $E_i$ en fonction des coefficients de pondération $C_{Ei}$. En d'autres termes, l'ensemble des points ayant heurtés un mur sont redistribués sur les éléments $E_i$ en fonction des probabilités de présence associées. Pour chaque élément $E_i$, les points redistribués sur l'élément $E_i$ sont positionnés sur le barycentre des points de l'élément $E_i$ n'ayant pas été déterminé comme heurtant un mur lors de la translation.

Les étapes S4 à S7 sont ensuite répétées à chaque itération du capteur de déplacement 2, c'est-à-dire à chaque mesure de déplacement réalisée par le capteur 2. La répétition des étapes S4 à

S7 a pour effet de faire converger les points vers une unique position sur l'espace de géolocalisation, appelée position de convergence.

Le module de traitement 3 détermine alors la localisation de l'équipement 1 comme correspondant à la position de convergence.

Contrairement aux procédés de filtrage particulaire habituellement utilisés par les systèmes de géolocalisation indoor, le procédé selon l'invention n'est pas basé sur des lois uniformes mais sur une probabilité de présence. Ainsi, le procédé converge beaucoup plus rapidement vers l'élément de l'espace de géolocalisation où se trouve l'utilisateur. Ce procédé de filtrage probabiliste permet ainsi de réduire la quantité de calcul nécessaire pour déterminer la position d'un utilisateur.

On compare ci-dessous le nombre d'opérations $\Theta$ qui doivent être réalisées pour localiser un équipement, dans un espace de géolocalisation, dans le cas d'un procédé de filtrage particulaire classique et dans le cas du procédé selon l'invention.

On appelle f la fréquence de fonctionnement du capteur de déplacement 2, et t la durée totale de fonctionnement du capteur 2.

De plus, on appelle E l'espace de géolocalisation, n le nombre de points générés par la pluie aléatoire sur l'espace E, et $\Omega$ l'ensemble des points qui heurtent un mur à chaque itération du procédé. On considère que $\Omega=1/4n$, c'est-à-dire qu'un quart des points heurtent un mur de l'espace E à chaque itération.

Pour un procédé de filtrage classique, les opérations à réaliser comprennent, lors d'une itération :

- un nombre 2n d'opérations pour les calculs liés aux translations des points de la pluie aléatoire, car les nouvelles coordonnées de chaque point doivent être calculées selon deux axes du plan,

- un nombre 2n d'opérations pour tester les collisions des points avec les murs de l'espace E,

- un nombre 2(3/4n) d'opérations pour le calcul du barycentre des points n'ayant pas heurtés de mur, et

- un nombre 2(1/4n) d'opérations pour le déplacement des points qui sont entrés en collision avec les murs.

On obtient donc, pour une itération, un nombre total d'opérations à réaliser égal à 6n. Les opérations sont répétées à la fréquence f du capteur de déplacement, pendant toute la durée t de fonctionnement. Le nombre total d'opérations $\Theta$ à réaliser est donc de l'ordre de :

$$\Theta = 6nft$$

Dans le cas du procédé selon l'invention, on appelle P(E) une partition de l'espace E, et $\Pi(P(E))$ une distribution probabiliste sur des éléments z de P(E) telle que :

$$\forall z \in P(E), \sum_{i=1}^{n} \Pi(z_i) = 1$$

On appelle Card(z) le nombre de points sur l'élément z, S la surface de l'espace E, et S(z) la surface de l'élément z.

$$\forall z \in P(E), Card(z) = n.\frac{S(z)}{S}\Pi(z)$$

Du fait de la distribution probabiliste, les éléments z autres que l'élément le plus probable se vident très rapidement au profit de l'élément plus probable. Ainsi, le nombre d'opérations à réaliser par itération converge très rapidement vers le nombre d'opérations à réaliser par itération sur l'élément z le plus probable. L'élément le plus probable est défini par :

$$\exists z \in P(E)/\Pi(z) = Max\,\Pi(x), \forall x \in P(E)$$

Le nombre total d'opérations $\Theta_{optimisé}$ à réaliser est donc de l'ordre de :

$$\Theta_{optimisé} = 6nft\frac{S(z)}{S}\Pi(z)$$

Le procédé selon l'invention permet donc de réduire le nombre d'opérations à réaliser, le facteur de gain étant de :

$$\frac{S(z)}{S}\Pi(z) \prec 1$$

La réduction du nombre d'opérations à réaliser permet de mettre en oeuvre le procédé de géolocalisation dans des équipements ne disposant pas d'une grande capacité de calcul, par exemple dans des Smartphone.

Le procédé de géolocalisation selon l'invention peut par exemple être utilisé pour fournir une aide à la localisation et au déplacement des personnes, notamment des personnes malvoyantes, dans les aéroports, les gares, les musées, les parkings ou toutes zones non couvertes par le GPS. Le procédé peut également être utilisé pour assurer une continuité de service dans le cadre des applications d'aide à la navigation GPS.

Bien entendu, la présente invention ne se limite pas aux formes de réalisation décrites ci-avant à titre d'exemples ; elle s'étend à d'autres variantes. Par exemple, le procédé peut être mis en oeuvre sur une partition d'un élément d'un espace de géolocalisation.

## Revendications

1. Procédé de traitement de données pour localiser un équipement (1) comprenant un capteur de déplacement (2) dans un espace de géolocalisation (10), le procédé comprenant des étapes :

    a) obtenir au moins une mesure de déplacement de l'équipement réalisée par le capteur de déplacement,
    b) obtenir un ensemble d'éléments ($E_i$) formant une partition de l'espace de géolocalisation,
    c) générer une pluie aléatoire de points sur l'espace de géolocalisation, et
    d) redistribuer lesdits points sur les éléments ($E_i$) de l'espace de géolocalisation en fonction de coefficients de pondération ($C_{Ei}$) respectivement associés aux éléments ($E_i$) et de ladite au moins une mesure de déplacement, un coefficient de pondération ($C_{Ei}$)) correspondant à une probabilité de présence de l'équipement dans l'élément ($E_i$) associé, le nombre de points redistribués sur cet élément étant d'autant plus grand que la probabilité de présence dans cet élément est grande, puis
    e) déterminer une localisation de l'équipement (1) dans l'espace de géolocalisation à partir des points redistribués.

2. Procédé selon la revendication 1, **caractérisé en ce qu'**il comprend une étape :

    f) pour chaque point généré, calculer une translation du point en fonction d'une mesure de déplacement de l'équipement (1) réalisée par le capteur de déplacement (2).

3. Procédé selon la revendication 2, **caractérisé en ce qu'**il comprend des étapes :

    g) pour chaque point translaté, tester si le point translaté heurte un mur de l'espace de géolocalisation, et
    h) redistribuer les points ayant été déterminés comme heurtant un mur de l'espace de géolocalisation sur les éléments ($E_i$) en fonction des coefficients de pondération ($C_{Ei}$), un point redistribué sur un élément ($E_i$) étant positionné à une position correspondant au barycentre des points dudit élément ($E_i$) n'ayant pas été déterminés comme heurtant un mur de l'espace de géolocalisation.

4. Procédé selon la revendication 3, **caractérisé en ce que** les étapes f), g) et h) sont répétées pour déterminer une position de convergence vers laquelle les points de la pluie aléatoire convergent.

5. Procédé selon la revendication 4, **caractérisé en ce que** les étapes f), g) et h) sont répétées à chaque réalisation d'une mesure de déplacement par le capteur de déplacement (2).

6. Procédé selon la revendication 1, **caractérisé en ce que** les coefficients de pondération ($C_{Ei}$) sont fonction d'un temps (T) de mise en oeuvre du procédé.

7. Procédé selon la revendication 1, **caractérisé en ce que** les coefficients de pondération ($C_{Ei}$) sont fonction d'une durée (AT) de mise en oeuvre du procédé.

8. Procédé selon la revendication 1, **caractérisé en ce qu'**il comporte une étape de réception de données de localisation provenant d'un module de géolocalisation (4) par satellite, par GSM, ou par WiFi, l'étape a) de détermination d'une entrée de l'équipement (1) dans un espace de géolocalisation étant réalisée en utilisant lesdites données de localisation.

9. Programme informatique comportant des instructions pour la mise en oeuvre du procédé selon la revendication 1 lorsque ce programme est exécuté par un processeur.

**10.** Equipement (1) comprenant un capteur de déplacement (2), configuré pour réaliser une mesure de déplacement de l'équipement (1), et un module de traitement (3), configuré pour :

- obtenir au moins une mesure de déplacement de l'équipement réalisée par le capteur de déplacement,
- obtenir un ensemble d'éléments ($E_i$) formant une partition de l'espace de géolocalisation,
- générer une pluie aléatoire de points sur l'espace de géolocalisation, et
- redistribuer lesdits points sur les éléments ($E_i$) de l'espace de géolocalisation en fonction de coefficients de pondération ($C_{Ei}$) respectivement associés aux éléments ($E_i$) et de ladite au moins une mesure de déplacement de l'équipement réalisée par le capteur de déplacement, un coefficient de pondération ($C_{Ei}$) correspondant à une probabilité de présence de l'équipement dans l'élément ($E_i$) associé, le nombre de points redistribués sur cet élément étant d'autant plus grand que la probabilité de présence dans cet élément est grande, puis
- déterminer une localisation de l'équipement (1) dans l'espace de géolocalisation à partir des points redistribués.

**11.** Equipement selon la revendication 10, **caractérisé en ce que** le module de traitement est configuré pour calculer, pour chaque point généré, une translation du point en fonction d'une mesure de déplacement de l'équipement (1) réalisée par le capteur de déplacement (2).

**12.** Equipement selon la revendication 11, **caractérisé en ce que** le module de traitement est configuré pour tester, pour chaque point translaté, si le point translaté heurte un mur de l'espace de géolocalisation, et pour redistribuer les points ayant été déterminés comme heurtant un mur de l'espace de géolocalisation sur les éléments ($E_i$) en fonction des coefficients de pondération ($C_{Ei}$), un point redistribué sur un élément ($E_i$) étant positionné à une position correspondant au barycentre des points dudit élément ($E_i$) n'ayant pas été déterminés comme heurtant un mur de l'espace de géolocalisation.

**13.** Equipement (1) selon la revendication 10, **caractérisé en ce qu'**il comporte en outre un module de géolocalisation (4) par satellite, par GSM, ou par WiFi.

**14.** Equipement selon la revendication 13, **caractérisé en ce que** le module de traitement (3) est configuré pour recevoir des données de localisation provenant du module de géolocalisation (4), et pour déterminer que l'équipement (1) entre dans un espace de géolocalisation en utilisant lesdites données de localisation.

**15.** Equipement (1) selon la revendication 10, caractérisé en ce le capteur de déplacement (2) est un capteur inertiel, un accéléromètre, ou un compas magnétique.

FIG.1.

FIG.2.

# FIG.3

Europäisches
Patentamt

European
Patent Office

Office européen
des brevets

# RAPPORT DE RECHERCHE EUROPEENNE

Numéro de la demande

EP 12 16 1610

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | FR 2 886 501 A1 (FRANCE TELECOM [FR]) 1 décembre 2006 (2006-12-01) * le document en entier * ----- | 1-3,6-15 | INV. G01S5/02 |
| Y | WO 2010/106530 A2 (CORK INST OF TECHNOLOGY [IE]; KLEPAL MARTIN [IE]; WIDYAWAN [IE]; PESCH) 23 septembre 2010 (2010-09-23) * abrégé * * page 12, ligne 5 - ligne 30; revendication 1; figure 23 * ----- | 1-3,6-15 | |
| A | EVENNOU F ET AL: "Map-aided indoor mobile positioning system using particle filter", WIRELESS COMMUNICATIONS AND NETWORKING CONFERENCE, 2005 IEEE NEW ORLEANS, LA, USA 13-17 MARCH 2005, PISCATAWAY, NJ, USA,IEEE, vol. 4, 13 mars 2005 (2005-03-13), pages 2490-2494, XP010791567, DOI: 10.1109/WCNC.2005.1424905 ISBN: 978-0-7803-8966-3 * abrégé * ----- | 1,10 | |

DOMAINES TECHNIQUES
RECHERCHES (IPC)

G01S

Le présent rapport a été établi pour toutes les revendications

| Lieu de la recherche | Date d'achèvement de la recherche | Examinateur |
|---|---|---|
| Munich | 20 juillet 2012 | Mercier, Francois |

EPO FORM 1503 03.82 (P04C02)

**ANNEXE AU RAPPORT DE RECHERCHE EUROPEENNE
RELATIF A LA DEMANDE DE BREVET EUROPEEN NO.**                    EP 12 16 1610

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-07-2012

| Document brevet cité au rapport de recherche | | Date de publication | Membre(s) de la famille de brevet(s) | | Date de publication |
|---|---|---|---|---|---|
| FR 2886501 | A1 | 01-12-2006 | AT | 468725 T | 15-06-2010 |
| | | | EP | 1886517 A2 | 13-02-2008 |
| | | | FR | 2886501 A1 | 01-12-2006 |
| | | | US | 2009054076 A1 | 26-02-2009 |
| | | | WO | 2006129003 A2 | 07-12-2006 |
| WO 2010106530 | A2 | 23-09-2010 | EP | 2409172 A2 | 25-01-2012 |
| | | | IE | 20100162 A1 | 29-09-2010 |
| | | | US | 2012007779 A1 | 12-01-2012 |
| | | | WO | 2010106530 A2 | 23-09-2010 |

EPO FORM P0460

Pour tout renseignement concernant cette annexe : voir Journal Officiel de l'Office européen des brevets, No.12/82